# EUROPEAN PATENT SPECIFICATION

(11) **EP 1 153 936 B1**
(45) Date of publication and mention of the grant of the patent: **04.08.2004**
(21) Application number: 01303922.7
(22) Date of filing: 30.04.2001
(51) Int. Cl.: C08F 4/40, C08F 2/22, C08L 27/06

(54) **Plastics additives, improved process, products, and articles containing same**
Kunststoffaditive, verbessertes Verfahren, Produkte und Gegenstände die diese enthalten
Additifs pour plastiques, procédé amélioré de synthèse, produits et articles les contentant

(30) Priority: 12.05.2000 US 203497 P
(43) Date of publication of application: 14.11.2001
(73) Proprietor: ROHM AND HAAS COMPANY, Philadelphia, Pennsylvania 19106-2399 (US)
(72) Inventor: Smith, Robert Julian, Harleysville, Pennsylvania 19438 (US); Rice, Katherine Sue, Glenside, Pennsylvania 19038 (US); Moyer, Kirk Harold, Yardley, Pennsylvania 19067 (US); Ketz, Richard John Jr., Princeton, New Jersey 08540 (US); Dougherty, Eugene Patrick, Langhorn, Pennsylvania 19047 (US); Lesko, Patricia Marie, Ottsville, Pennsylvania 18942 (US)
(74) Representative: Kent, Venetia Katherine

(56) References cited:
- EP-A- 0 484 723
- EP-A- 0 911 358
- DE-A- 2 006 966
- US-A- 5 610 256

## Description

The present invention relates to improved redox polymerization processes for preparing polymer particles useful as plastics additives, improved polymer particles useful as plastics additives, thermoplastic resin blends containing these polymer particles, and articles containing these thermoplastic resin blends. These improved processes increase the rate of initiation and reduce the overall time needed for synthesis. Moreover, these improved processes efficiently provide polymer particles having molecular weights greater than four million, which makes them especially useful as plastics processing aids, e.g., for preparing polyvinyl chloride foam.

Thermoplastic resins need various polymeric additives for modifying their processing and / or property characteristics. Examples of such polymeric additives for resins include impact modifiers for improving impact strength (e.g., to reduce part breakage and/or cuttability) and processing aids for controlling the rheological characteristics for optimizing resin processability and increasing process efficiency (e.g., to control foam density and/or surface appearance). Although the preparation of additives from aqueous dispersions of plastics additive polymer particles is typically known in the art, there is nevertheless the continuing need to increase both the process efficiency and the properties of these additives.

Processing aids are useful for increasing thermoplastic resin melt strength which is important for certain thermoplastic process applications, such as foaming and thermoforming. Processing aids for thermoplastic resins are typically polymers and copolymers containing units polymerized from ethylenically unsaturated monomers such as vinyl aromatic, (meth)acrylonitrile, and /or C1 - C4 alkyl methacrylate monomers. Processing aids are typically prepared using emulsion polymerization techniques to yield dispersions of 20 - 500 nm mean diameter polymer particles, which typically have molecular weights in the range of from 200,000 to 6,000,000 g/mol. Processing aids typically have Tg greater than 25°C and are typically dried and isolated to form a free-flowing powder, the powder particles having a 50 - 500 micron mean diameter. These powders are subsequently added to thermoplastic resin formulations. The amount of processing aid used in a thermoplastic resin formulation varies with the type of resin and application, but is typically between 1 and 15 phr.

Impact modifiers are typically provided as multi-stage or core-shell emulsion polymers having a core or rubbery stage based on homopolymers or copolymers of butadiene and/or acrylate monomers. Impact modifiers are used in matrix polymers such as acrylonitrile-butadiene-styrene ("ABS"), styrene-acrylonitrile copolymers, methyl methacrylate polymers, poly(vinyl chloride) ("PVC"), various engineering resins such as polycarbonate, polyesters, or polyamides, and thermosetting resins such as epoxies. Impact modifiers containing one or more rubbery copolymers of butadiene and styrene and at least one stage or shell of poly(methyl methacrylate) are known in the art as methylmethacrylate-butadiene-styrene ("MBS") plastic additives. Similarly, impact modifiers containing one or more rubbery copolymers of n-alkyl acrylates and at least one stage or shell of poly(methyl methacrylate) or copolymers thereof are known in the art as acrylic impact modifiers ("AIM") plastics additives. The amount of impact modifiers used in a thermoplastic resin formulation varies with the type of resin and application, but is typically between 1 and 30 phr.

There is a constant need to reduce the cost of manufacturing these plastics additives while maintaining or improving the properties of the modified matrix resins. In the past, synthetic processes typically involved redox-initiated emulsion polymerization wherein the initiation step required hours to complete. It is therefore desirable to reduce the required time for the initiation step to minutes. Improving the properties of the plastics additives include providing enhanced processing characteristics to modified matrix resin blends. One example is the need to provide high molecular weight (greater than four million g/mol) processing aids for preparing low density PVC foam to provide the requisite melt strength. It is further desired to be able to use efficient emulsion recovery processes known in the art, such as spray-drying or coagulation to prepare dry powders of the plastics additives.

Redox initiation enables polymerizations to be carried out by generating free radicals at relatively low temperatures. Redox initiation is used extensively for the preparation of vinyl polymers derived from ethylenically-unsaturated monomers such as styrene, butadiene, acrylonitrile, and (meth)acrylic esters. In redox systems, free radicals are generated by the action of a reducing agent on an oxidant. Emulsion polymerizations which can be initiated at low temperature are particularly advantageous for efficient processing, in general, and for producing rubbery materials having superior low-temperature elasticity, in particular. Redox initiation systems typically consist of an oxidizing agent (e.g., a persulfate salt or a peroxide), a reducing agent (e.g., a sulfite salt), a metal ion species, and optionally a chelating agent. Further details are available in Mark et al (Ed.), *Encyclopedia of Polymer Science and Engineering*, **17**, 355 (1989). Unfortunately, redox polymerizations are inherently slow to initiate because of the need to eliminate oxygen from the reaction system.

In U.S. Patent No. 5,610,256 Kato et al. disclose a process for producing high molecular weight polymer emulsions by redox polymerization of a vinyl monomer, wherein the redox polymerization initiator contains a persulfate, a reducing agent and activating agent, or a hydroperoxide, a reducing agent, an activating agent and a chelating agent. In order to achieve high molecular weights and high conversions of monomer to polymer, Kato's process requires that the oxygen concentration in the aqueous phase of the reaction system is maintained at zero or less as measured relative to the dissolved oxygen concentration in a 0.5 wt. % sodium bisulfite aqueous solution at 20°C under atmospheric pressure, which can be achieved by bubbling nitrogen gas through the reaction medium for at least two hours. Kato's process also requires that the reaction temperature should preferably be 50°C or lower. However, both of these requirements result in long process times which reduces process efficiency.

Kato's emulsions are intended for forming dry films which can suitably be used in fields related to paints, adhesives, fibers, paper, and civil engineering. As a result, Kato's polymer particles are soft (e.g., having glass transitions less than about 20°C) so that these emulsions cannot be satisfactorily dried into a powder using conventional emulsion drying techniques (e.g., spray drying). As a result the preparation of such emulsions would not be useful for producing spraydried polymeric compositions for use as plastics additive for thermoplastic resins.

The problem faced by the inventors was to provide an economically efficient method for preparing polymer compositions for use as plastics additives without requiring a long time to reduce the dissolved oxygen concentration, without requiring that the reaction temperature be kept below 50°C, and which can be dried to a powder form. Another problem faced by the inventors is to provide plastics additives processing aids prepared efficiently by redox emulsions polymerization techniques having molecular weights greater than 6.5 million g/mol.

The present inventors have discovered new processes for preparing polymeric compositions useful as plastics additive that overcome the shortcomings of U.S. Pat. No. 5,610,256. The present inventors have discovered that by using a combination of copper and iron metal ion species in the redox-initiated free radical emulsion polymerizations, higher molecular weight polymers suitable for use as plastics additives can be efficiently prepared versus using either copper or iron alone. The process of the present invention does not require that the dissolved oxygen concentration is zero or less as measured relative to the dissolved oxygen concentration in a 0.5 wt. % sodium bisulfite aqueous solution at 20°C under atmospheric pressure.

The present inventors have also discovered that using a combination of copper and iron metal ion species in the redox-initiated free radical emulsion polymerizations yields polymers having substantially higher molecular weights (i.e., greater than 6.5 million g/mol) than using either copper or iron metal ion species alone.

The present inventors have also discovered that polymeric compositions prepared using a combination of copper and iron metal ion species in the redox-initiated free radical emulsion polymerizations are also useful as plastic additives for modifying the processing characteristics and impact properties of thermoplastic resins.

A first object of the present invention is to provide a process for preparing an aqueous dispersion of plastics additive polymer particles, comprising the steps of emulsion polymerizing one or more ethylenically unsaturated monomers in an aqueous medium in the presence of a free radical redox initiator system, wherein the free radical redox initiator system comprises an oxidizing agent, a reducing agent, and from 0.01 to 5.00 ppm based on monomer weight total iron and copper metal ion species.

As used herein, the term "stage" is intended to encompass its broadest possible meaning, including the meaning conveyed in prior art such as U.S. Patent 3,793,402, U.S. Patent 3,971,835, U.S. Patent 5,534,594, and U.S. Patent 5,599,854, which offer various means for achieving "staged" polymers.

As used herein, the term "mixture" refers to a combination of one or more chemical compounds.

As used herein, the term (meth)acrylic esters refers to the class of compounds containing the alkyl esters of methacrylic acid or acrylic acid.

As used herein, the term C1 to C12 alkyl (meth)acrylate refers to the class of compounds containing the alkyl esters of methacrylic acid or acrylic acid, wherein the alkyl esters have from one to twelve carbon atoms in the alkyl side chain of the ester.

As used herein, the term (meth)acrylonitrile refers to the compounds acrylonitrile and methacrylonitrile.

As used herein, the term "parts" refers to parts by weight.

As used herein, the term "mean particle size" refers to the mean diameter of polymer particles.

All ranges disclosed herein are inclusive and combinable.

In the process for preparing an aqueous dispersion of plastics additive polymer particles of the present invention, the emulsion polymerization step is carried out in a suitable reactor wherein the reactants (oxidants, reductants, metal ion species, monomers, emulsifiers) are suitably combined, mixed, and reacted in an aqueous medium, and wherein heat may be transferred in to and away from the reaction zone. The reactants can be added slowly (gradually, as in a semi-batch process) over time or quickly as a "shot" (batch) into the reactor wherein a fast rate of initiation and propagation is indicated by a fast rise in reactor temperature.

The free radical redox initiator system of the present invention includes at least one oxidizing agent ("oxidant"), at least one reducing agent ("reductant"), and a mixture of iron and copper metal ion species. The free-radical initiators which may be used in the various steps of the process are those conventionally utilized in free-radical redox polymerizations conducted in the temperature range from 10°C to 100°C, preferably from 55°C and 90°C. Temperatures higher than 100°C are possible using equipment that is designed for elevated pressures. Initiation temperatures are kept below 85°C, preferably below 55°C for a single stage polymerization.

The redox initiator systems include but are not limited to oxidants in combination with reductants. Suitable oxidants include organic (alkyl-, aryl-, or acyl-) hydroperoxides, persulfate salts, perphosphate salts, or organic or inorganic peroxides. The preferred oxidants include persulfate salts and organic hydroperoxides. The most preferred oxidants include ammonium, sodium, or potassium persulfate, and *t*-butyl hydrogen peroxide .

The amount of oxidant used is in the range of from 0.005 wt. % (based on total monomer weight) to 1.0 wt. %. The preferred amount of oxidant used is in the range of from 0.01 wt. % to 0.5 wt. %. The most preferred amount of oxidant used is in the range of from 0.0125 wt. % to 0.25 wt. %. If too little oxidant is used, the polymerization occurs too slowly, or not at all. Too much oxidant undesirably leads to molecular weight reduction.

Suitable reductants include but are not limited to sodium formaldehyde sulfoxylate, sodium sulfite, sodium metabisulfite, sodium hydrosulfite, ascorbic acid, isoascorbic acid, hydrazine, hydroxylamine or hydroxylamine salts, reducing sugars, mercaptans, and sulfinic acid derivatives. The preferred reductants include sodium formaldehyde sulfoxylate, sodium metabisulfite, isoascorbic acid, and sodium hydrosulfite, sodium thiosulfate, sodium sulfite . The most preferred reductants include sodium hydrosulfite.

The amount of reductant is in the range of from 0.01 wt. % (based on total monomer) to 1.0 wt. %. The preferred amount of reductant used is in the range of from 0.025 wt. % to 0.5 wt. % . The most preferred amount of reductant used is in the range of from 0.05 wt. % to 0.20 wt. %. If too little reductant is used then polymerization is slow or does not occur. If too much reductant is used then the reaction may be slow, or may not occur, or the desired (high) molecular weight may not be obtained.

The redox reactions of the present invention appear to be catalyzed by the combination of iron and copper metal ion species. The metal ion species are suitably provided in their soluble salt form. Suitable soluble iron salts are those commonly know to dissolve in water include but are not limited to ferrous or ferric sulfate, ferrous or ferric chloride, and other soluble salts. Depending upon the pH of the reaction mixture these iron salts also use an added chelating agent to maintain solubility, for example, ferrous iron-ethylene-diamine tetraacetic acid ("Fe-EDTA"). Other chelating agents include the various analogs of EDTA know in the art. The preferred iron salts include Fe-EDTA and ferrous sulfate Most preferred iron salts include ferrous sulfate.

Suitable soluble copper salts include those common copper salts which are soluble in water. Examples include but are not limited to cupric nitrate, cuprous or cupric chloride, cupric sulfate, cuprous or cupric acetate. The preferred copper salts include cupric nitrate and cupric sulfate. Non-salt forms of iron or copper can also be charged into the reactor as Fe(0) or Cu(0) wherein the soluble salts may form.

The total amount of iron and copper metal ion species are suitably in the range of from 0.01 to 5.0 ppm, preferably in the range of from 0.05 to 2.5 ppm, and most preferably in the range of from 0.50 to 1.5 ppm based on total weight of monomer. Individually, the amount of iron metal ion specie is suitably in the range of from more than 0.01 to less than 5.0 ppm, preferably in the range of from 0.025 to 1.5 ppm, and most preferably in the range of from 0.35 to 1.0 ppm based on total weight of monomer. Individually, the amount of copper metal ion specie is suitably in the range of from more than 0.01 to less than 5.0 ppm, preferably in the range of from 0.025 to 1.0 ppm, and most preferably in the range of from 0.15 to 0.50 ppm based on total weight of monomer. It is preferred that that weight ratio of iron:copper is in the range of from 10:1 to 1:10, more preferably from 5:1 to 1:5, and most preferably from 2.5:1 to 1:2.5.

The monomers which may be polymerized using the free radical redox initiator system of the present invention include any of the one or more ethylenically unsaturated monomers commonly known in the art, such as those listed in The Polymer Handbook, 3^{rd} Edition, Brandrup and Immergut, Eds., Wiley Interscience, Chapter 2, (1989).

Initiation proceeds quickly when the amount of dissolved oxygen in the aqueous medium is less than 10 ppm as measured relative to the dissolved oxygen concentration in a 0.5 wt % sodium bisulfite aqueous solution at 20°C under atmospheric pressure. Preferably, the dissolved oxygen is less than 8 ppm, and most preferably less than 5 ppm when the initiator is added to the reactor. If the oxygen level is too high then the redox polymerization reaction will not properly initiate.

The amount of dissolved oxygen can be controlled by contacting the aqueous medium with an inert gas (e.g., sparging, sweeping, and/or bubbling nitrogen). A chemical oxygen scavenger can also be used. Suitable chemical oxygen scavengers include but are not limited to sulfites, hydrogen sulfites, dithionates, sodium thiosulfate, disodium hydrogen phosphate, sodium sulfite. The preferred chemical oxygen scavenger is sodium hydrosulfite.

It is preferred that the oxygen scavenger reacts with oxygen, with or without Fe and/or Cu present. Use of chemical oxygen scavenger levels that are just enough to reduce the O2 in the monomer are recommended, as too much chemical oxygen scavenger can produce too much by products which can degrade the polymer properties, such as Mw.

In the process of the present invention, the time needed to obtain a 1°C exotherm will usually require less than 100 minutes, typically less than 50 minutes, and often less than 10 minutes. Likewise, the time to peak exotherm will usually require less than 100 minutes, typically less than 50 minutes, and often less than 25 minutes.

Suitable emulsifiers include but are not limited to those conventionally used in emulsion polymerization, such as salts of alkyl, aryl, aralkyl, or alkaryl sulfates or sulfonates, alkyl poly(alkoxyalkyl) ethers, alkyl poly(alkoxyalkyl) sulfates, or alkali salts of long-chain fatty acids such as potassium oleate, preferably alkyl diphenyloxide disulfonate.

Optionally, one or more chain transfer agents may be incorporated during any of the aforementioned process steps to control the molecular weight of the plastics additive polymer. Chain transfer agents or mixtures thereof as known in the art, such as alkyl mercaptans, may be used to control molecular weight.

The monomers may be added batch-wise ("shot") or fed continuously over time into the reactor. It is preferred that the first mixture of one or more monomers is added as a shot over 10-40 minutes. Continuous feeding of the first mixture of monomers into the reactor over times between 2 and 12 hours is useful where it is important to control the reaction temperature.

The first mixture of monomers may be polymerized in the presence of a pre-formed polymer dispersion ("seed" latex), for control of desired particle size or for structural modification of the resulting polymer. The "seed" latex is often of small PS, such as below 100 nm, and of a composition similar to that of the first stage to be formed. The pre-formed polymer dispersion may be a polymer of a rubbery material, and may be similar or different in composition to the core polymer. Alternatively, it may be a hard non-rubbery polymer of e.g., polystyrene or poly(methyl methacrylate), present to adjust the refractive index, as taught in Myers et al., U. S. Patent 3,971,835.

Further, the invention encompasses polymer particles having other or additional stages, which are polymerized after the formation of a first stage is completed.

The plastics additive polymer particles of the present invention are used in several forms containing various amounts of water, including emulsion, aqueous dispersion, coagulated slurry, wetcake, or powder. Powder forms of the plastics additive polymer particles may be isolated from the aqueous dispersion in various ways, the preferred methods being spray-drying or coagulation. The techniques disclosed in U.S. Patent 4,897,462, may also be applied to the emulsion during isolation to produce a spheroidal product which, when dried, exhibits outstanding powder flow, low dusting, and higher bulk density than conventionally isolated powders.

The plastics additive polymer particles of the present invention may be used in various ways. They may be admixed with thermoplastic resins, such as poly(vinyl chloride), to improve impact strength for many uses, such as calendered sheet, injection molded articles, blow-molded articles, and extruded articles optionally containing blowing agents for preparing foams. When the component monomers of the core-shell polymer are added in a way that the refractive indices of plastics additives polymer particles are carefully matched to that of clear thermoplastic resins, the resulting polymers are useful in clear applications.

We have also found that it is possible to prepare polymers having up to 70% of an acid-containing vinyl monomer such as acrylic acid and methacrylic acid according to the present invention. In these cases such compositions find various uses in coating applications for textiles, construction, and the graphic arts. They are also good for preparing aqueous emulsion coatings for plastics having various surface polarities, especially if the surface polarity is low. Plastics having a relatively low polarity for which the acid-monomer containing polymers are useful include polyolefins, acrylics such as polymethyl methacrylate, polycarbonate, polyvinyl chloride, and polyester resins such as poly(alkylene) terephthalates.

The plastics additives may be admixed with many polymeric matrices besides PVC, including but not limited to, polymers of methyl methacrylate, styrene-acrylonitrile copolymers, aromatic polyesters, such as poly(ethylene terephthalate) or poly(butylene terephthalate), polycarbonates, polyamides, polyacetals, and polyolefins. A number of suitable polymeric matrices are found in various treatises on polymeric materials, e.g. The Polymer Handbook, 3^{rd} Edition, Brandrup and Immergut, Eds., Wiley Interscience, Chapter 2, (1989). The utility of such blends is varied, and include equipment panels and housings such as for appliances or computers, as well as automobile parts such as bumpers and body panels.

The plastics additives of the present invention can be prepared as powders, pellets, or aqueous dispersions. Powders are prepared by spray drying, freeze drying, and coagulating the aqueous particle dispersion of the present invention. Powders are readily added along with resins and other components directly in the plastics processing equipment. Alternatively, the powders may be first compounded either alone or with other components to form pellets.

Concentrated forms of the plastics additives prepared according to the present invention can also be prepared using compounding plastics processing equipment to prepare up to 99% by weight of the additives in one or more thermoplastic resins. The aqueous dispersion form of the plastics additives prepared according to the present invention can also be added directly to resins, which thereby avoids the necessity of first drying the plastics additives.

The plastics additives according to the present invention are used as processing aids in vinyl chloride resins such as PVC, CPVC, copolymers thereof, as well as a number of thermoplastic resins known in the art, including but not limited to polyolefins, polyesters, polyamides, polycarbonates, ABS plastics, SAN resins, blends, ands alloys thereof. Typically, such processing aids are used in PVC for promoting fusion (reducing fusion time) which allows PVC to be melt processed using plastics processing equipment at conditions to avoid degradation of the resin. Such equipment is commercially available and known to persons skilled in the art. Commercial processes include but are not limited to: calendering of film and sheet; extrusion of sheet, profile, pipe, fencing, film, and other continuously-manufactured extruded products; thermoforming; and injection molding. The processing aids according to the present invention are used to adjust the rheological properties of the melt. For example, in resin calendering operations it is desirable for the resin melt to have high melt strength while having low viscosity.

The processing aids according to the present invention typically are comprised of ethylenically unsaturated monomers, and preferably comprise C1-C20 acrylic, C1-C20 methacrylic, vinyl aromatic, acrylonitrile, methacrylonitrile, and acrylic acid and methacrylic acid. When acid monomers are used it is desirable that the amount of acid monomer in the processing aid polymer is kept low, preferably below 1%. The selection of monomers is typically accomplished to control the glass transition (Tg) and compatibility of the processing aid polymer with the resin. The desirable Tg varies with its use. Typically, processing aids for PVC have Tg values between 60 and 125°C. These Tg values are controlled by the relative amounts of copolymerizable monomers during the polymerization process. Typically, processing aids having greater amounts of n-alkyl acrylates (e.g., n-butyl acrylate and ethyl acrylate) are useful for keeping the glass transition low. Alternatively, high Tg can be accomplished using C1-C3 methacrylates, especially MMA, as well styrene and acrylonitrile. Copolymers, terpolymers, quadpolymers (i.e., a polymer comprised substantially of four monomers), etc. can be readily prepared according to the process of the present invention.

It is preferred that the processing aids prepared according to the present invention are made with a mixture of one or more ethylenically unsaturated monomers comprising at least 50% of one or more monomers selected from methyl methacrylate, styrene, alpha-methyl styrene, and acrylonitrile. It is further preferred that the processing aids are prepared by polymerizing the following monomers: from 55 to 97 weight percent methyl methacrylate, from 3 to 20 weight percent of n-butyl acrylate, and from 0 to 25 weight percent n-butyl methacrylate.

The processing aids made according to the process of the present invention have molecular weights (Mw) between 0.2 and 15 million g/mol. Processing aids which are useful for lubricating the resin blend in the plastics processing equipment typically have molecular weights below 1 million. Processing aids which are typically added to adjust rheological properties have Mw preferably above 1 million. Higher molecular weights provide an increased expansion ratio and a lower density in foam applications. In PVC foam applications for example, the processing aid molecular weights are typically in the range of 3 million to 12 million g/mol. Processing aids having Mw in the range of from 1 to 10 million are also useful for PVC applications such as siding and profile. Processing aids having molecular weights in the range of from 0.2 to 1.0 million are also useful as lubricants.

Processing aids based on polymers and copolymers prepared with methyl methacrylate ("MMA") monomer which have a molecular weight greater than 4,000,000 g/mol are particularly useful in preparing PVC foam resin formulations having increased melt strength for controlling foam density. Similarly, processing aids having molecular weights lower than 4,000,000 g/mol are useful for preparing PVC resin formulations to promote rapid fusion (melting) of the PVC powder during processing.

PVC foams can be prepared using up to 15 phr of the processing aids made according to the process of the present invention. Preferably, the PVC foams use at least 1 phr of the processing aid. For foam core PVC pipe applications the preferred level of the processing aid is 1 to 4 phr. For other foam PVC applications, the preferred levels are 2 to 10 phr, and more preferably 3 to 8 phr. The resulting PVC foams ideally have densities of less than or equal to 0.9 g/cc, preferably less than or equal to 0.7 g/cc, and at least 0.2 g/cc, preferably at least 0.3 g/cc.

Acrylic impact modifiers (AIMS) can also be prepared using the plastics additive polymer particles of the present invention. Such impact modifiers comprise from 40 to 100, preferably from 75 to 96, and most preferably from 82 to 94 weight percent of at least one rubbery polymer, and from 0 to 25, preferably from 4 to 20, most preferably from 6 to 18 weight percent of at least one hard polymer.

The amount of AIMS used to modify thermoplastic resin formulation varies with the type of resin and application, but is generally between 1 and 30 phr. For impact modifying PVC the amount is preferably at least 4 phr, and most preferably at least 7 phr.

The AIMS particles are prepared using emulsion polymerization of the present invention to provide particles having a mean particle size greater than or equal to 100 nm, preferably in the range of from 100 to 500 nm, and more preferably in the range of from 100 to 300 nm. The rubbery polymers of the AIMS particles are preferably in the form of a spherical core particle, although it is possible for the AIMS to have rubbery domains. The rubbery polymers comprise polymerized units derived from one or more ethylenically unsaturated monomers, wherein the glass transition temperature of the at least one rubbery polymer is less than 25°C, preferably less than 0°C, and most preferably less than -40°C. Such rubbery polymers can be prepared from polymerized units derived from one or more ethylenically unsaturated monomers, such as alkyl acrylates, 1,3-dienes, vinyl acetate, siloxanes, alpha-olefins, and mixtures thereof.

For best impact properties, it is preferred that the rubbery polymer, especially if formed from an acrylate monomer such as BA or 2-ethylhexyl acrylate, further contains 0.1 to 5 parts by weight of units derived from at least one multiunsaturated monomer, such as at least one of ALMA, allyl acrylate, DALMA, diallyl fumarate divinylbenzene, a di- or triacrylate ester of a polyol, or a di- or trimethacrylate ester of a polyol, and the like to function as a rubbery crosslinker and/or graft linker between the rubbery (core) and hard (shell)domains.

The AIMS preferably has a core-shell morphology, wherein the hard shell polymer is grafted to the rubbery core polymer. It is preferred that the AIMS particles further comprise from 0.01 to 5 weight percent of one or more multi-ethylenically unsaturated units so that at least 80 weight percent of the at least one hard polymer is grafted to the rubbery polymer.

The AIMS may contain additional shells between, or external to, the rubbery polymer and hard polymer domains. Such additional shells, if present, can further be derived from particular monomers, such as styrene, for improvement of refractive index, as long as the other requirements of the first core/shell polymer are met.

The following examples are presented to illustrate the invention, but the invention should not be limited by these examples.

### EXAMPLES 1 - 27

### SYNTHESIS OF PLASTICS ADDITIVES

The abbreviations listed below are used throughout the examples:
MMA = Methyl Methacrylate
BA = Butyl Acrylate
BMA = Butyl Methacrylate
EA = Ethyl Acrylate
STY = Styrene
VA = Vinyl Acetate
AN = Acrylonitrile
SMA = Stearyl Methacrylate
GMAA = glacial methacrylic acid
AA = Acrylic acid
nDDM = n-Dodecyl Mercaptan
SVS = Sodium Vinyl Sulfonate
TPMTA = Trimethylolpropane Triacrylate
ALMA = Allyl Methacrylate
SFS = Sodium Formaldehyde Sulfoxylate
SLS = Sodium lauryl sulfate
tBHP = tert-butyl hydroperoxide
EDTA = Ethylene-diamine tetraacetic acid
APS = Ammonium Persulfate
SHS = sodium hydrosulfite
SPS = sodium persulfate
CNHP = Cupric nitrate hemipentahydrate
FSH = Ferrous sulfate heptahydrate
GAA = Glacial Acetic Acid
NH4OH = Ammonium hydroxide
DIW = Deionized Water
polymer seed = 45% solids emulsion polymer, 52% BA, 47% MMA, 1% GMAA
% = percent by weight on total monomer, (% wt)
g = grams
RT = Room temperature
Mw = weight average molecular weight (g/mol)
PS = particle size
ppm = parts per million by weight based on total monomer weight
phr = per hundred parts resin

In the description of the compositions, a single slash ("/") implies a copolymer, numbers separated by a single slash within parentheses indicates the copolymer ratio of the particular stage.

### GENERAL PROCEDURE AND EQUIPMENT

Weight average molecular weights (Mw) were determined using gel permeation chromatography (GPC) using the following test conditions: Eluent: Uninhibited THF, 1 ml/min nominal flow rate; Columns: 2 Polymer Labs PL Gel 20 micron Mixed A ; 30 cm length; columns held at 40°C. Prefilter before first column, no guard column; Injection: 150 microliters; Refractive Index detector at 40°C; flow corrected by flow marker (p-xylene) co-injected with sample; Sample diluent is 4 ml xylene in 1000 cc's uninhibited THF; Samples prepared at 0.5 mg per ml diluent were filtered through three stacked disk filters; a Whatman 0.45 micron filter, a Gelman 0.45 micron filter, followed by a Gelman 0.25 micron filter. Samples run with this method were calibrated against PARALOID (TM) K400 processing aid (Rohm and Haas Company, Philadelphia, Pennsylvania) with an assigned Mw of 6.2 million g/mol using Polymer Labs Caliber version 7.0x software.

The time to a 1°C exotherm and time to peak exotherm was measured and recorded in Table 2 below. The solids percent weight was measured by gravimetric weight loss analysis. PS was measured using a Brookhaven BI-90 instrument.

### EXAMPLE 1

The reaction was carried out in a 5 gallon FLUITRON reactor (Fluitron, Inc, Ivyland, Pennsylvania) with a pitched blade turbine mixer. The reactor has a jacket with cooling and thermocouples to monitor the reactor and jacket temperatures. The reactor was charged with 6450 g DIW at 20°C and sparged with nitrogen for 30 minutes. After the sparge, 1.51 g GAA, 373 g polymer seed and 355 g Dowfax 2A1 surfactant were charged to the reactor. A nitrogen sweep was applied for an additional 15 minutes. A monomer mix made up of a mixture of BMA / BA / MMA in the weight ratio of 316.3 g / 947.7 g / 6642.6 g was added to the reactor and rinsed with 250 g DIW. The reactor contents were mixed for 10 minutes and the temperature was adjusted to 25°C. The reaction was initiated with the addition of 0.00592 g CNHP, 0.178 g FSH, 8.5 g APS (0.10% ) dissolved in 150 g DIW and 10.3 g SHS dissolved (0.13%) in 150 g DIW and 1.85 g NH4OH. An exotherm of 80°C was observed over nineteen minutes, with full jacket cooling applied when the reactor temperature reached 70°C. The reaction was cooled to 60°C and an additional 8.28 g BA were added followed by 0.17 g SFS dissolved in 25 g DIW and 0.1 g tBHP dissolved in 25 g DIW. The batch was cooled to RT and filtered through a 400 micron filter. The PS was 88 nm, pH was 2.9, solids of 50.1% and Mw = 8.4 million.

### EXAMPLE 2

A 5 liter, four-neck glass flask reactor equipped with a mechanical blade half moon stirrer, a thermocouple, a reflux condenser, heater, and cooler was charged with 1850 g DIW at 35°C and sparged with nitrogen for 30 minutes. After the sparge, 43 g polymer seed was added to the flask. A nitrogen sweep was applied for an additional 15 minutes. A monomer emulsion made up of 670 g DIW, 10.1 g Rhodacal DS-4 surfactant, 12.75 g Triton X-405 surfactant, 725.5 g VA, 171.4 g BA, 9.2 g SVS was added to the reactor and rinsed with 50 g DIW. The reactor contents were mixed for 10 minutes and the temperature was adjusted to 30°C. The reaction was initiated with the addition of 0.0012 g CNHP, 0.0036 g FSH, 2.08. g APS (0.23%) dissolved in 30 g DIW and 1.55 g (0.17%) SHS dissolved in 30 g DIW and 0.3 g NH4OH. An exotherm of 58°C was observed over 100 minutes. The batch was cooled to 60°C and 0.027 g SFS dissolved in 10 g DIW followed by 0.1 g tBHP dissolved in 10 g DIW were added to the batch. The batch was cooled to RT and filtered through a 400 micron filter. The PS was 143 nm, pH was 3.39, solids of 24.4% and Mw = 2.3 million.

### EXAMPLE 3

A similar reactor as in Example 2 was charged with 1850 g DIW at 35°C and sparged with nitrogen for 30 minutes. After the sparge, 43 g polymer seed was added to the flask. A nitrogen sweep was applied for an additional 15 minutes. A monomer emulsion made up of 670 g DIW, 35 g Rhodacal DS4 surfactant, 897 g VA, 9.2 g SVS and rinsed with 50 g DIW. The reactor contents were mixed for 10 minutes and the temperature was adjusted to 30°C. The reaction was initiated with the addition of 0.0012 g CNHP, 0.0036 g FSH, 2.08. g APS (0.23%) dissolved in 30 g DIW and 1.55 g (0.17%) SHS dissolved in 30 g DIW and 0.3 g NH4OH. An exotherm of 58°C was observed over 85 minutes. The batch was cooled to 60°C and 0.027 g SFS dissolved in 10 g DIW followed by 0.1 g tBHP dissolved in 10 g DIW were added to the batch. The batch was cooled to RT and filtered through a 400 micron filter. The PS was 114 nm, pH was 3.7, solids of 22.9% and Mw = 2.2 million.

### EXAMPLE 4

A similar reactor as in Example 2 was charged with 1500 g DIW at 35°C and sparged with nitrogen for 30 minutes. After the sparge, 43 g polymer seed was added to the flask. A nitrogen sweep was applied for an additional 15 minutes. A monomer emulsion made up of 670 g DIW, 45 g Sodium Lauryl Sulfate surfactant, 1380 g MMA, 154 g EA, 2.2 g n-DDM were rinsed with 50 g DIW into the reactor. The reactor contents were mixed for 10 minutes and the temperature was adjusted to 30°C. The reaction was initiated with the addition of 0.00153 g CNHP, 0.0046 g FSH, 1.54 g APS (0.10%) dissolved in 30 g DIW and 1.99 g (0.13%) SHS dissolved in 30 g DIW and 0.3 g NH4OH. An exotherm of 64°C was observed over 25 minutes. The batch was cooled to 60°C and 0.027 g SFS dissolved in 10 g DIW followed by 0.16 g tBHP dissolved in 10 g DIW were added to the batch. The batch was cooled to RT and filtered through a 400 micron filter. The PS was 91 nm, pH was 3.1, solids of 39.5% and Mw = 2.0 million.

### EXAMPLE 5

A similar reactor as in Example 2 was charged with 1500 g DIW at 35°C and sparged with nitrogen for 30 minutes. After the sparge, 43 g polymer seed was added to the flask. A nitrogen sweep was applied for an additional 15 minutes. A monomer emulsion made up of 670 g DIW, 45 g Sodium Lauryl Sulfate surfactant, 1380 g MMA, 154 g EA, 1.1 g n-DDM were rinsed into the reactor with 50 g DIW. The reactor contents were mixed for 10 minutes and the temperature was adjusted to 30°C. The reaction was initiated with the addition of 0.00153 g CNHP, 0.0046 g FSH, 1.54 g APS (0.10%) dissolved in 30 g DIW and 1.99 g (0.13%) SHS dissolved in 30 g DIW and 0.3 g NH4OH. An exotherm of 66°C was observed over 28eight minutes. The batch was cooled to 60°C and 0.027 g SFS dissolved in 10 g DIW followed by 0.16 g tBHP dissolved in 10 g DIW were added to the batch. The batch was cooled to RT and filtered through a 400 micron filter. The PS was 92 nm, pH was 3.1, solids of 39.7% and Mw = 2.8 million.

### EXAMPLE 6

A similar reactor as in Example 2 was charged with 1670 g DIW at 35°C and sparged with nitrogen for 30 minutes. After the sparge, 0.245 g GAA were added to the flask. A nitrogen sweep was applied for an additional 15 minutes. A Stage I monomer emulsion made up of 320 g DIW, 26 g Sodium Lauryl Sulfate surfactant, 1276 g BA, 14.4 g TMPTA, 0.38 g ALMA, and rinsed with 50 g DIW. The reactor contents were mixed for 10 minutes and the temperature was adjusted to 30°C. The Stage I monomers were initiated with the addition of 0.00385 g CNHP, 0.00128 g FSH, 1.28 g APS (0.10%) dissolved in 30 g DIW and 1.66 g (0.13%) SHS dissolved in 30 g DIW and 0.3 g NH4OH. An exotherm of 51°C was observed over 15 minutes. The batch was cooled to 50°C, and Stage II monomer mix ,341 g MMA with 1.36 g n-DDM plus a 60 gram rinse of DIW was added to the reactor. The Stage II monomers were initiated with0.24 g SFS dissolved in 10 g DIW followed by 0.256 g SPS dissolved in 10 g DIW were added to the batch. The batch exothermed 14°C over 15 minutes. The batch was cooled to RT and filtered through a 400 micron filter. PS = 90 nm, pH = 3.3, solids = 40.5%, and shell Mw = 1.4 million.

### EXAMPLE 7

A similar reactor as in Example 2 was charged with 1670 g DIW at 35°C and sparged with nitrogen for 30 minutes. After the sparge, 0.245 g GAA were added to the flask. A nitrogen sweep was applied for an additional 15 minutes. A Stage I monomer emulsion made up of 320 g DIW, 26 g SLS, 1276 g BA, 14.4 g TMPTA, 0.38 g ALMA , 1.36 g n-DDM and rinsed with 50 g DIW to prepare a rubbery core particle. The reactor contents were mixed for 10 minutes and the temperature was adjusted to 30°C. The reaction was initiated with the addition of 0.00128 g CNHP, 0.00385 g FSH, 1.28 g APS (0.10%) dissolved in 30 g DIW and 1.66 g (0.13%) SHS dissolved in 30 g DIW and 0.3 g NH4OH. An exotherm of 53°C was observed over sixteen minutes.

The batch was cooled to 50°C, and Stage II monomer mix, 341 g MMA plus a 60 gram rinse of DIW was added to the reactor to prepare a hard shell polymer. The batch was initiated with 0.24 g SFS dissolved in 10 g DIW followed by 0.256 g SPS dissolved in 10 g DIW were added to the batch. The batch exothermed 14°C over 25 minutes. The batch was cooled to RT and filtered through a 400 micron filter. The PS was 93 nm, pH was 3.1, solids of 40.7% and shell Mw = 1.0 million.

### EXAMPLE 8

A similar reactor as in Example 1 was charged with 1670 g DIW at 35°C and sparged with nitrogen for 30 minutes. After the sparge, 0.245 g GAA, 50 g Dowfax2A1, 10 g DIW rinse were added to the flask. A nitrogen sweep was applied for an additional 15 minutes. A Stage I monomer made up of 1276 g BA and rinsed with 45 g DIW. The reactor contents were mixed for 10 minutes and the temperature was adjusted to 30°C. The reaction was initiated with the addition of 0.00123 g CNHP, 0.0038 g FSH, 1.27 g APS (0.10%) dissolved in 30 g DIW and 1.65 g (0.13%) SHS dissolved in 30 g DIW and 0.3 g NH4OH. An exotherm of 52°C was observed over 20 minutes. The batch was cooled to 60°C. The remaining monomers were chased with 0.024 g SFS dissolved in 10 g DIW followed by 0.016 g tBHP dissolved in 10 g DIW were added to the batch. The batch was cooled to RT and filtered through a 400 micron filter. The PS was 83 nm, pH was 3.8, solids of 39.0% and Mw = 6.0 million.

### EXAMPLE 9

A similar reactor as in Example 1 was charged with 6450 g DIW at 20°C and sparged with nitrogen for 30 minutes. After the sparge, 1.51 g GAA, 266 g polymer seed and 309 g Dowfax 2A1 surfactant were charged to the reactor. A nitrogen sweep was applied for an additional 15 minutes. A monomer mix made up of a mixture of BMA / BA / MMA in the weight ratio of 316.3 g / 947.7 g / 6642.6 g was added to the reactor and rinsed with 300 g DIW. The reactor contents were mixed for 10 minutes and the temperature was adjusted to 25°C. The reaction was initiated with the addition of 0.0158 g CNHP, 0.0474 g FSH, 2.53 g tBHP (0.032%), 10.26 g APS (0.13%) dissolved in 150 g DIW and 10.26 g SHS dissolved (0.13%) in 150 g DIW and 1.85 g NH4OH. An exotherm of 58°C was observed over nine minutes. The reaction was cooled to 60°C and an additional 8.28 g BA were added followed by 0.17 g SFS dissolved in 25 g DIW and 0.1 g tBHP dissolved in 25 g DIW. The batch was cooled to RT and filtered through a 400 micron filter. The PS was 66 nm, pH was 2.9, solids of 41.6% and Mw = 5.2 million.

### EXAMPLE 10

A similar reactor as in Example 2 was charged with 1000 g DIW at 60°C and sparged with nitrogen for 30 minutes. After the sparge, 0.09 g GAA, 16.06 g polymer seed, 20.91 g Dowfax2A1, and 50 g DIW rinse were added to the reactor. A nitrogen sweep was applied for an additional 15 minutes. A monomer mix made up of 232.59 g for MMA, 116.3 g STY, 46.52 g AN, 69.78 g BA and rinsed with 25 g. The reactor contents were mixed for 10 minutes. The reaction was initiated with the addition of 0.000118 g CNHP, 0.000352 g FSH, 0.06 g APS (0.013%) dissolved in 50 g DIW and 0.3 g (0.064%) SHS dissolved in 50 g DIW and 0.11 g NH4OH. An exotherm of 23°C was observed over 26 minutes. The batch was cooled to 70°C. An additional amount of 2.33 g STY was added to the reactor. The batch was chased with 0.058 g SFS dissolved in 25 g DIW followed by 0.09 g tBHP dissolved in 25 g DIW were added to the batch. The batch was cooled to RT and filtered through a 400 micron filter. The PS was 84 nm, solids of 24.1% and Mw = 5.5 million.

### EXAMPLE 11

A similar reactor as in Example 2 was charged with 1350 g DIW at 20°C and sparged with nitrogen for 30 minutes. After the sparge, 0.245 g GAA, 44.2 g polymer seed, 57.5 g Dowfax2A1, and 20 g DIW rinse were added to the reactor. A nitrogen sweep was applied for an additional 15 minutes. A monomer mix made up of 306.8 g BMA, 49.4 g BA, 923.5 g MMA and rinsed into the reactor with 45 g DIW. The reactor contents were mixed for 10 minutes and cooled to 20°C. The reaction was initiated with the addition of 0.000325 g CNHP, 0.000965 g FSH, 0.304 g APS (0.0235%) dissolved in 25 g DIW and 1.63 g (0.129%) SHS dissolved in 25 g DIW and 0.3 g NH4OH. An exotherm of 6°C was observed over two hours. The batch was cooled to 70°C. A second monomer mix of 28.4 g BMA, 56.8 g BA, 56.8 g MMA and a 45 gram DIW rinse were added to the reactor. The batch was initiated with 0.142 g SFS dissolved in 5 g DIW followed by 0.142 g sodium persulfate dissolved in 5 g DIW were added to the batch exothermed 2°C over two minutes. The batch was cooled to RT and filtered through a 400 micron filter. The final PS was 93 nm, solids of 45.1%, pH of 3.9 and Mw = 8.0 million.

### EXAMPLE 12

A similar reactor as in Example 2 was charged with 1720 g DIW at 20°C and sparged with nitrogen for 30 minutes. After the sparge, 0.245 g GAA, 44.2 g polymer seed, 57.5 g Dowfax2A1, and 20 g DIW rinse were added to the reactor. A nitrogen sweep was applied for an additional 15 minutes. A monomer mix made up of 306.8 g for BMA, 49.4 g BA, 923.5 g MMA and rinsed into the reactor with 45 g DIW. The reactor contents were mixed for 10 minutes and cooled to 20°C. The reaction was initiated with the addition of 0.000159 g CNHP, 0.000477 g FSH, 0.267 g APS (0.021%) dissolved in 25 g DIW and 1.4 g (0.11%) SHS dissolved in 25 g DIW and 0.3 g NH4OH. An exotherm of 56°C was observed over 85 minutes. The batch was cooled to 60°C. 2 g BA was added to the reactor followed by 0.027 g SFS dissolved in 5 g DIW and 0.016 g tBHP. The batch was cooled to RT and filtered through a 400 micron filter. The final PS was 91 nm, solids of 40.0%, pH of 4.4 and Mw = 10.1 million.

### EXAMPLE 13

A similar reactor as in Example 2 was charged with 1350 g DIW and 12.7 of Methyl-alpha Cyclodextrin at 20°C and sparged with nitrogen for 30 minutes. After the sparge, 57.5 g Dowfax2A1, and 20 g DIW rinse were added to the reactor. A nitrogen sweep was applied for an additional 15 minutes. A monomer mix made up of 66.1 g for BMA, 32.7 g BA, 1387 g MMA, 165.2 g SMA and rinsed with 45 g. The reactor contents were mixed for 10 minutes and cooled to 20°C. The reaction was initiated with the addition of 0.000414 g CNHP, 0.00124 g FSH, 0.396 g APS (0.024%) dissolved in 25 g DIW and 2.14 g (0.13%) SHS dissolved in 25 g DIW and 0.6 g NH4OH. An exotherm of 70°C was observed over 20 minutes. The batch was cooled to 60°C. An additional 2 g BA, were added to the reactor followed by 0.035 g SFS dissolved in 5 g DIW and 0.021 g tBHP. The batch was cooled to RT and filtered through a 400 micron filter. The final PS was 66 nm, solids of 42.8%, and Mw = 6.2 million.

### EXAMPLE 14

A similar reactor as in Example 1 was charged with 6522 g DIW at 26°C and sparged with nitrogen for 30 minutes. After the sparge, 1.13 g GAA, 280 g polymer seed and 266 g Dowfax 2A1 surfactant were charged to the reactor. A nitrogen sweep was applied for an additional 15 minutes. A monomer mix made up of 237.2 g BMA 710.7 g BA, 4982 g MMA was added to the reactor and rinsed with 200 g DIW. The reactor contents were mixed for 10 minutes and the temperature was adjusted to 25°C. The reaction was initiated with the addition of 0.00444 g CNHP, 0.133 g FSH, 5.9 g APS (0.10%) dissolved in 120 g DIW and 7.69 g SHS dissolved (0.13%) in 150 g DIW and 1.85 g NH4OH. An exotherm of 60°C was observed over 23three minutes. The reaction was cooled to 60°C and a second monomer mix of 141.2 g BMA, 422.9 g BA, 2964.3 g MMA and 150 g DIW rinse were added. The reaction was initiated with the addition of 0.00264 g CNHP, 0.0791 g FSH, 3.5 g APS (0.10%) dissolved in 100 g DIW and 4.58 g SHS dissolved (0.13%) in 120 g DIW and 1.1 g NH4OH. An exotherm of 26°C was observed over 12 minutes. An additional 0.255 g SFS dissolved in 25 g DIW and 0.15 g tBHP dissolved in 25 g DIW. The batch was cooled to RT and filtered through a 400 micron filter. The final PS was 103 nm, pH was 3.2, solids of 53.5% and Mw = 9.2 million.

### EXAMPLE 15-A

A similar reactor as in Example 2 was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 51.2 g for BMA, 153.4 g BA, 1075.2 g MMA and rinsed into the reactor with 45 g DIW. The reactor contents were mixed for 10 minutes and cooled to 30°C. The reaction was initiated with the addition of 0.000192 g CNHP, 0.00576 g FSH, 1.278 g APS (0.10%) dissolved in 25 g DIW and 1.66 g (0.13%) SHS dissolved in 25 g DIW and 0.3 g NH4OH. An exotherm of 59°C was observed over 24four minutes. The batch was cooled to 60°C. An additional 1.34 g BA, were added to the reactor followed by 0.027 g SFS dissolved in 5 g DIW and 0.016 g tBHP. The batch was cooled to RT and filtered through a 400 micron filter. The final PS was 87 nm, solids of 40.0%, pH of 3.1 and Mw = 9.9 million.

### COMPARATIVE EXAMPLE 15-B

Example 15-A was repeated with no Fe. The reaction was initiated at 29 C, with the addition of 0.000192 grams cupric nitrate hemipentahydrate, 1.278 grams ammonium persulfate (0.10%) dissolved in 25 grams of deionized water and 1.66 grams (0.13%) sodium hydrosulfite dissolved in 25 grams of deionized water and 0.3 grams of ammonium hydroxide. An exotherm of 63°C was observed over twenty-three minutes. The batch was cooled to 60°C. An additional 1.34 grams of BA, were added to the reactor followed by 0.027 grams of sodium formaldehyde sulfoxylate dissolved in 5 grams of deionized water and 0.016 grams of tBHP. The batch was cooled to room temperature and filtered through a 400 micron filter. The final particle size was 85 nm, solids of 40.3%, pH of 2.7 and Mw of 6.4 million.

### COMPARATIVE EXAMPLE 15-C

Example 15-A was repeated with no copper to initiate the reaction. The reaction was initiated at 29 C, with the addition of 0.000576 grams FSH, 1.278 grams APS (0.10%) dissolved in 25 grams of DIW and 1.66 grams (0.13%) SHS dissolved in 25 grams of DIW and 0.3 grams of NH4OH. An exotherm of 63°C was observed over 23 minutes. The batch was cooled to 60°C. An additional 1.34 g of BA, were added to the reactor followed by 0.027 grams of SFS dissolved in 5 g of DIW and 0.016 grams of tBHP. The batch was cooled to room temperature and filtered through a 400 micron filter. The final PS was 83 nm, solids of 40.4%, pH of 2.7 and Mw of 6.3 million.

The Mw results in Example 15-A, 15-B, and 15-C show that compared to using either Fe or Cu alone, the combination of Fe and Cu to initiate the polymerization increases the resulting Mw from 6.3 - 6.4 million to 9.9 million, a surprising increase of more than 50%.

### EXAMPLE 16

A similar reactor as in Example 2 was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 51.2 g for BMA, 153.4 g BA, 1075.2 g MMA was added to the reactor and rinsed with 45 g DIW. The reactor contents were mixed for 10 minutes and cooled to 30°C. The reaction was initiated with the addition of 0.000128 g CNHP, 0.00128 g FSH, 1.278 g APS (0.10%) dissolved in 25 g DIW and 1.66 g (0.13%) SHS dissolved in 25 g DIW and 0.3 g NH4OH. An exotherm of 55°C was observed over 25 minutes. The batch was cooled to 60°C. An additional 1.34 g BA, were added to the reactor followed by 0.027 g SFS dissolved in 5 g DIW and 0.016 g tBHP. The batch was cooled to RT and filtered through a 400 micron filter. The final PS was 87 nm, solids of 39.8%, pH of 2.9 and Mw = 10.4 million.

### EXAMPLE 17

A similar reactor as in Example 2 was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 51.2 g for BMA, 153.4 g BA, 1075.2 g MMA and rinsed into the reactor with 45 g DIW. The reactor contents were mixed for 10 minutes and cooled to 30°C. The reaction was initiated with the addition of 0.00192 g CNHP, 0.000639 g FSH, 1.278 g APS (0.10%) dissolved in 25 g DIW and 1.66 g (0.13%) SHS dissolved in 25 g DIW and 0.3 g NH4OH. An exotherm of 61°C was observed over 30 minutes. The batch was cooled to 60°C. An additional 1.34 g BA, were added to the reactor followed by 0.027 g SFS dissolved in 5 g DIW and 0.016 g tBHP. The batch was cooled to RT and filtered through a 400 micron filter. The final PS was 90 nm, solids of 39.9%, pH of 3.0 and Mw = 9.5 million.

### EXAMPLE 18

A similar reactor as in Example 2 was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 115.2 g STY, 281.6 g BA, 883.2 g MMA was rinsed into the reactor with 45 g DIW. The reactor contents were mixed for 10 minutes and cooled to 30°C. The reaction was initiated with the addition of 0.000965 g CNHP, 0.00288 g FSH, 1.276 g APS (0.10%) dissolved in 25 g DIW and 1.66 g (0.13%) SHS dissolved in 25 g DIW and 0.3 g NH4OH. An exotherm of 65°C was observed over 65 minutes. The batch was cooled to 65°C. An additional 0.054 g SFS dissolved in 10 g DIW and 0.032 g tBHP. The batch was cooled to RT and filtered through a 400 micron filter. The final PS was 88 nm, solids of 39.5%, pH of 3.0 and Mw = 8.4 million.

### EXAMPLE 19

The reaction was carried out in a similar reactor as described in Example 2. The dissolved oxygen concentration was measured with a Mettler-Toledo series 4300 dissolved oxygen meter. The oxygen meter was calibrated to 0 ppm while the electrodes were dipped in 0.5% sodium bisulfite aqueous solution at 20°C under atmospheric pressure. The reactor was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 51.2 g for BMA, 154.8 g BA, 1075.2 g MMA was rinsed into the reactor with 45 g DIW. The reactor contents were mixed for 10 minutes and cooled to 30°C and the dissolved oxygen concentration was measured at 7.4 ppm prior to adding initiator. The reaction was initiated with the addition of 0.000959 g CNHP, 0.00288 g FSH, 1.278 g APS (0.10%) dissolved in 25 g DIW and 1.66 g (0.13%) SHS dissolved in 25 g DIW and 0.3 g NH4OH. The dissolved oxygen concentration was measured at 0.43 ppm when the initial reaction occurred and remained between 0.2 ppm and 0.5 ppm during the exotherm of 62°C was observed over 25 minutes. The batch was cooled to 60°C. An additional 0.027 g SFS dissolved in 5 g DIW and 0.016 g tBHP. The batch was cooled to RT and filtered through a 400 micron filter. The final PS was 85 nm, solids of 40.2%, pH of 3.1 and Mw = 9.1 million. The dissolved oxygen concentration measurements during the process are reported below in Table 1.

### EXAMPLE 20

A similar reactor as in Example 2 was charged with 1670 g DIW at 35°C and sparged with nitrogen for 30 minutes. After the sparge, 5 g Sodium Carbonate dissolved in 30 g DIW, 43 g polymer seed, 50 g Dowfax2A1, and 20 g DIW rinse were added to the reactor. The pH was measured at 9.3 with a Fisher pH meter. A nitrogen sweep was applied for an additional 15 minutes. A monomer mix made up of 51.2 g for BMA, 154.8 g BA, 1075.2 g MMA and rinsed into the reactor with 45 g DIW. The reactor contents at this point have a pH of 10.2. The reactor contents were mixed for 10 minutes and cooled to 30°C. The reaction was initiated with the addition of 0.000959 g CNHP, 0.00288 g FSH, 1.598 g APS (0.125%) dissolved in 25 g DIW and 1.66 g (0.13%) SHS dissolved in 25 g DIW and 0.3 g NH4OH. The pH was measured at 10.2 when the initial reaction occurred. An exotherm of 57°C was observed over 65 minutes. The batch was cooled to 60°C. An additional 0.027 g SFS dissolved in 5 g DIW and 0.016 g tBHP. The batch was cooled to RT and filtered through a 400 micron filter. The final PS was 121 nm, solids of 40.1%, pH of 8.5 and Mw = 12.0 x10^6.

### EXAMPLE 21

A similar reactor as in Example 2 was charged with 1670 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 51.2 g for BMA, 153.4 g BA, 1075.2 g MMA was rinsed into the reactor with 45 g DIW. The reactor contents were mixed for 10 minutes and cooled to 30°C. The reaction was initiated with the addition of 0.0115 g CNHP, 0.00383 g FSH, 1.1.598 g APS (0.125%) dissolved in 25 g DIW and 1.66 g (0.13%) SHS dissolved in 25 g DIW and 0.3 g NH4OH. An exotherm of 61°C was observed over 75 minutes. The batch was cooled to 60°C. An additional 1.34 g BA, were added to the reactor followed by 0.027 g SFS dissolved in 5 g DIW and 0.016 g tBHP. The batch was cooled to RT and filtered through a 400 micron filter. The final PS was 103 nm, solids of 39.8%, pH of 3.1 and Mw = 8.2 million.

### COMPARATIVE EXAMPLE 22

A similar reactor as in Example 2 was charged with 1705 g DIW at 35°C and sparged with nitrogen for 30 minutes. After the sparge, 0.25 g GAA dissolved in 10 g DIW, 44.2 g polymer seed, 57.5 g Dowfax2A1, and 20 g DIW rinse were added to the reactor. A nitrogen sweep was applied for an additional 15 minutes. A monomer mix made up of 306.8 g for BMA, 49.4 g BA, 923 g MMA and rinsed with 50 g DIW. The reactor contents were mixed for 10 minutes and cooled to 30°C. The reaction was initiated with the addition of 0.078 g EDTA, 0.006 g FSH, 3.26 g (0.25%) tBHP dissolved in 20 g DIW and 1.29 g (0.10%) SFS dissolved in 20 g DIW. An exotherm of 55°C was observed over 195 minutes. The batch was cooled to 67°C. An additional 2 g BA, 0.027 g SFS dissolved in 5 g DIW and 0.016 g tBHP. The batch was cooled to RT and filtered through a 400 micron filter. The final PS was 96 nm, solids of 39.9%, pH of 3.2 and Mw = 6.8 million.

In comparing Example 22 to Example 16, which are at equal solids levels and comparable batch size, it is apparent that a substantial gain in productivity is achieved by keeping the total weight of metal ion species less than 5.0 ppm. As a result, higher molecular weight polymers can be synthesized in a shorter amount of time according to the process of the present invention.

### EXAMPLE 23

A similar reactor as in Example 2 was charged with 1690 g DIW at 35°C and sparged with nitrogen for 30 minutes. After the sparge, 0.245 g GAA, 43 g polymer seed, 50 g Dowfax2A1, and 20 g DIW rinse were added to the reactor. A nitrogen sweep was applied for an additional 15 minutes. A monomer mix made up of 230.4 g BA, 1049.6 g MMA was rinsed into the reactor with 45 g DIW. The reactor contents were mixed for 10 minutes and cooled to 30°C. The reaction was initiated with the addition of 0.00096 g CNHP, 0.00288 g FSH, 1.09 g APS (0.085%) dissolved in 25 g DIW and 1.66 g (0.13%) SHS dissolved in 30 g DIW and 0.3 g NH4OH. An exotherm of 63°C was observed over 25 minutes. The batch was cooled to 60°C. An additional 0.054 g SFS dissolved in 5 g DIW and 0.032 g tBHP. The batch was cooled to RT and filtered through a 400 micron filter. The final PS was 84 nm, solids of 39.9%, pH of 2.8 and Mw = 9.6 million. The dissolved oxygen measurements during this process are reported below in Table 1.

### EXAMPLE 24

A similar reactor as in Example 2 was charged with 1400 g RT DIW under a nitrogen atmosphere and deoxygenated using a 30 minute nitrogen sparge and a 10 minute nitrogen sweep. A monomer pre-emulsion, prepared from 285 g DIW, 71.6 g of a 28% solution of SLS, 900 g EA, 90 g MMA and 10 g AA were added to the reactor and rinsed in with 30 g DIW. The reaction was initiated with 0.006 g FSH, 0.004 g CNHP, 0.24 g APS and 1.1 g SHS dissolved in a total of 44 g DIW. An exotherm of 68 °C was observed over seven minutes. The reaction was cooled to 60 °C and an additional 0.015 g FSH dissolved in 10 g DIW was added followed by 3.4 g tBHP and 1.68 g isoascorbic acid dissolved in a total of 80 g DIW. After two hours and with the temperature at 45°C, the pH was raised with 14 g of 14% aqueous NH4OH. The reaction product was cooled to RT and filtered through a 100 mesh screen. A polymer latex with a solids content of 34.7 wt%, a PS of 70 nm, a pH of 8.3 and Mw = 1.2 million was obtained.

### EXAMPLE 25

A similar reactor as in Example 2 was charged with 1400 g RT DIW and deoxygenated using a 30 minute nitrogen sparge and a 10 minute nitrogen sweep. A monomer pre-emulsion, prepared from 232 g DIW, 71.6 g of a 28% solution of SLS, 615 g EA, 350 g BA and 35 g AA was added to the reactor and rinsed in with 30 g DIW. The reaction was initiated with 0.006 g FSH, 0.004 g CNHP, 0.24 g APS and 1.1 g SHS dissolved in a total of 44 g DIW. An exotherm of 67°C was observed over the course of four minutes. The reaction was cooled to 60°C and 2.5 g tBHP and 1.25 g isoascorbic acid dissolved in a total of 60 g DIW were added. The reaction product was then cooled to RT. A polymer latex with a solids content of 34.9 wt%, a PS of 64 nm and a pH of 4.3 and Mw = 2.6 million was obtained.

### EXAMPLE 26

A similar reactor as in Example 1 was charged with 8340 g DIW at 30°C and sparged with nitrogen for 30 minutes. After the sparge, 1.51 g GAA, 373 g polymer seed and 355 g Dowfax 2A1 surfactant were charged. A nitrogen sweep was applied for an additional 15 minutes. A monomer mix made up of 316.3 g a mixture of BMA BA / MMA in the weight ratio of 316.3 g / 947.7 g / 6642.6 g was added to the reactor and rinsed with 250 g DIW. The reactor contents were mixed for 10 minutes and the temperature was adjusted to 25°C. The reaction was initiated with the addition of 0.00592 g CNHP, 0.178 g FSH, 8.5 g APS (0.10%) dissolved in 150 g DIW and 10.3 g SHS dissolved (0.13%) in 150 g DIW and 1.85 g NH4OH. An exotherm of 66°C was observed over 20 minutes, with full jacket cooling applied when the reactor temperature reached 70°C. The reaction was cooled to 60°C and an additional 8.28 g BA were added followed by 0.17 g SFS dissolved in 25 g DIW and 0.1 g tBHP dissolved in 25 g DIW. The batch was cooled to RT and filtered through a 400 micron filter. The PS was 85 nm, pH was 3.2, solids of 46.0% and Mw = 9.7 million. The emulsion was spray dried into a powder.

### EXAMPLE 27

A similar reactor as in Example 1 was charged with 8340 g DIW at 30°C and sparged with nitrogen for 30 minutes. After sparging, 1.51 g GAA, 373 g polymer seed and 355 g Dowfax 2A1 surfactant were charged to the reactor. A nitrogen sweep was applied for an additional 15 minutes. A monomer mix made up of 316.3 g BMA / 947.7 / 6642.6 g MMA was added to the reactor and rinsed with 250 g DIW. The reactor contents were mixed for 10 minutes and the temperature was adjusted to 25°C. The reaction was initiated with the addition of 0.00592 g CNHP, 0.178 g FSH, 8.5 g APS (0.10%) dissolved in 150 g DIW and 10.3 g SHS dissolved (0.13%) in 150 g DIW and 1.85 g NH4OH. An exotherm of 62°C was observed over 20 minutes, with full jacket cooling applied when the reactor temperature reached 70°C. The reaction was cooled to 60°C and an additional 8.28 g BA were added followed by 0.17 g SFS dissolved in 25 g DIW and 0.1 g tBHP dissolved in 25 g DIW. The batch was cooled to RT and filtered through a 400 micron filter. The PS was 88 nm, pH was 3.1, solids of 45.2% and Mw = 10.4 million. The emulsion was subsequently spray dried.

### EXAMPLE 28

A similar reactor as in Example 1 was charged with 5250 g of DIW at 35°C and sparged with nitrogen for thirty minutes. After the sparge, 1.13 g of GAA were charged into the reactor. A nitrogen sweep was applied for an additional 15 minutes. A monomer emulsion made up of 1300 g of DIW, 127 g of Dowfax 2A1, 1021.5 g BA, and 4533 g MMA was added to the reactor followed by 200 g DIW. The reactor contents were mixed for 10 minutes and the temperature was adjusted to 30°C. The reaction was initiated with 0.00416 g CNHP, 0.0.0125 g FSH, 5.9 g SPS (0.10%) dissolved in 120 g DIW, and 7.69 g SHS dissolved (0.13%) in 120 g of deionized water and 1.85 g NaOH (50% solution). An exotherm of 57°C was observed over 30 minutes, with full jacket cooling applied when the reactor temperature reached 70°C. The reactor contents was held for 30 minutes and then cooled to 80°C. An initial charge of 6.4 g of SPS diluted in 300 g of DIW was added to the reactor. A second monomer emulsion contained 860 g of DIW, 84.8 g of Dowfax 2A1, 681 g BA and 3022.2 g MMA. A second catalyst (initiator) solution contained 2.6 g SPS in 150 g of water. The second monomer emulsion and catalyst were gradually fed into the reactor over 60 minutes. At the completion of this feeding, the monomer emulsion and catalyst were respectively rinsed with 250 g and 20 g of DIW. After holding the reactor contents at temperature for 15 minutes, 0.25 g of SFS dissolved in 25 g of DIW and 0.5 g of tBHP dissolved in 25 g of DIW were added to the reactor. The reactor contents were cooled to room temperature and filtered through a 400 micron filter. The final particle size was 109 nm, pH was 2.4, solids of 51.7% and Mw was 8.8 million. The dissolved oxygen concentration measurements during the process are reported below in Table 1. The composition and processing results in Examples 1 - 28 are summarized in Table 2.

**Table 1:**

| **Summary of Dissolved Oxygen Concentration Measurements** | | | |
|---|---|---|---|
| | **Dissolved Oxygen Concentration, ppm** | | |
| **Process Step** **Measured** **Immediately After:** | **Example 19** | **Example 23** | **Example 28** **(Stage I)** |
| 30 minute Nitrogen Sparge | 0.94 | 5.32 | 6.31 |
| 15 minute Nitrogen Sweep | 0.84 | 4.93 | - |
| Adding Monomer Mix | 7.57 | 6.00 | - |
| Adding Initiator and SHS | 5.60 | 4.39 | 1.23 |
| One minute after Adding SHS | 0.43 | 0.34 | 0.99 |
| Five minutes after Adding SHS | 0.50 | 0.01 | 0.01 - 0.05 |

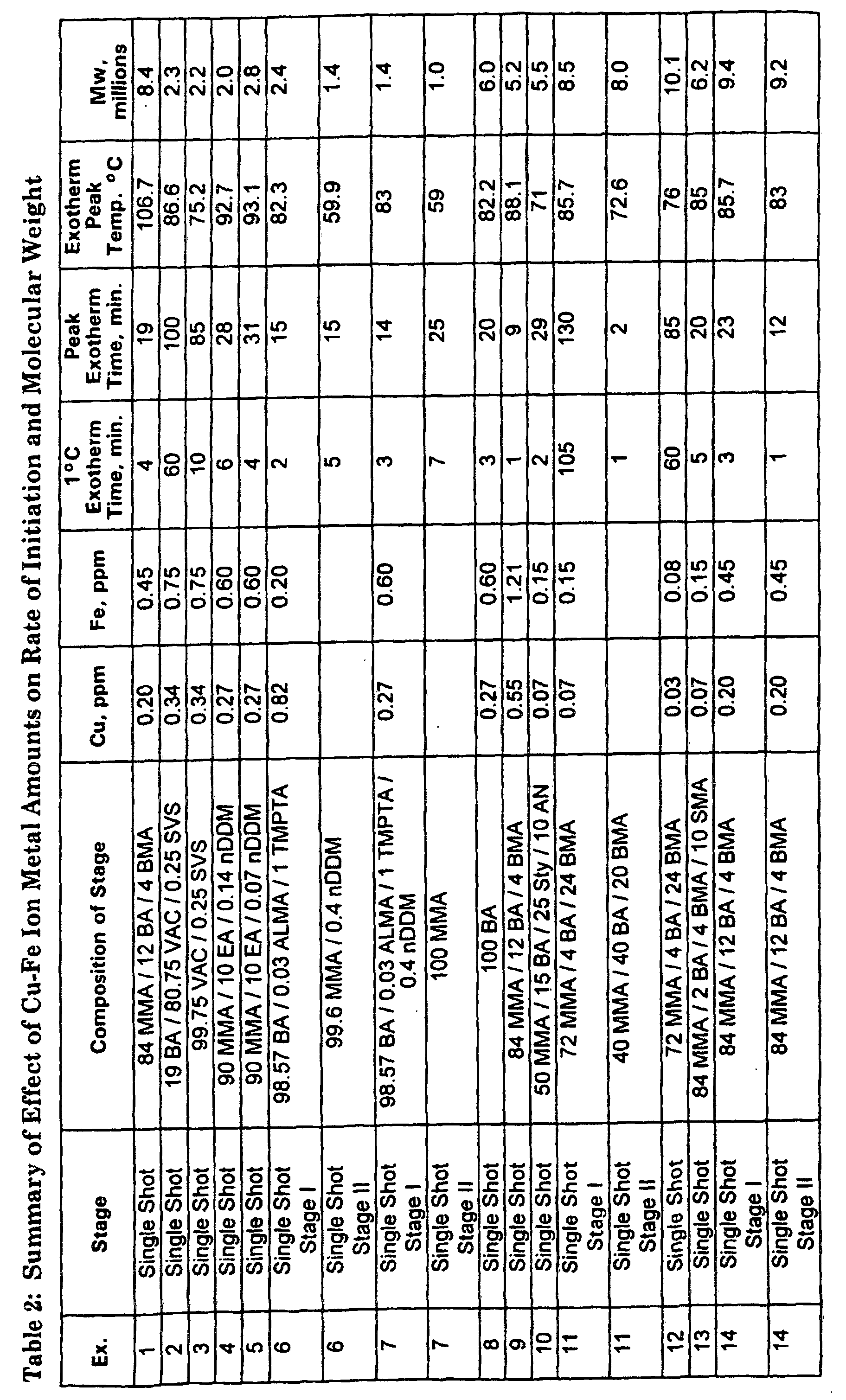

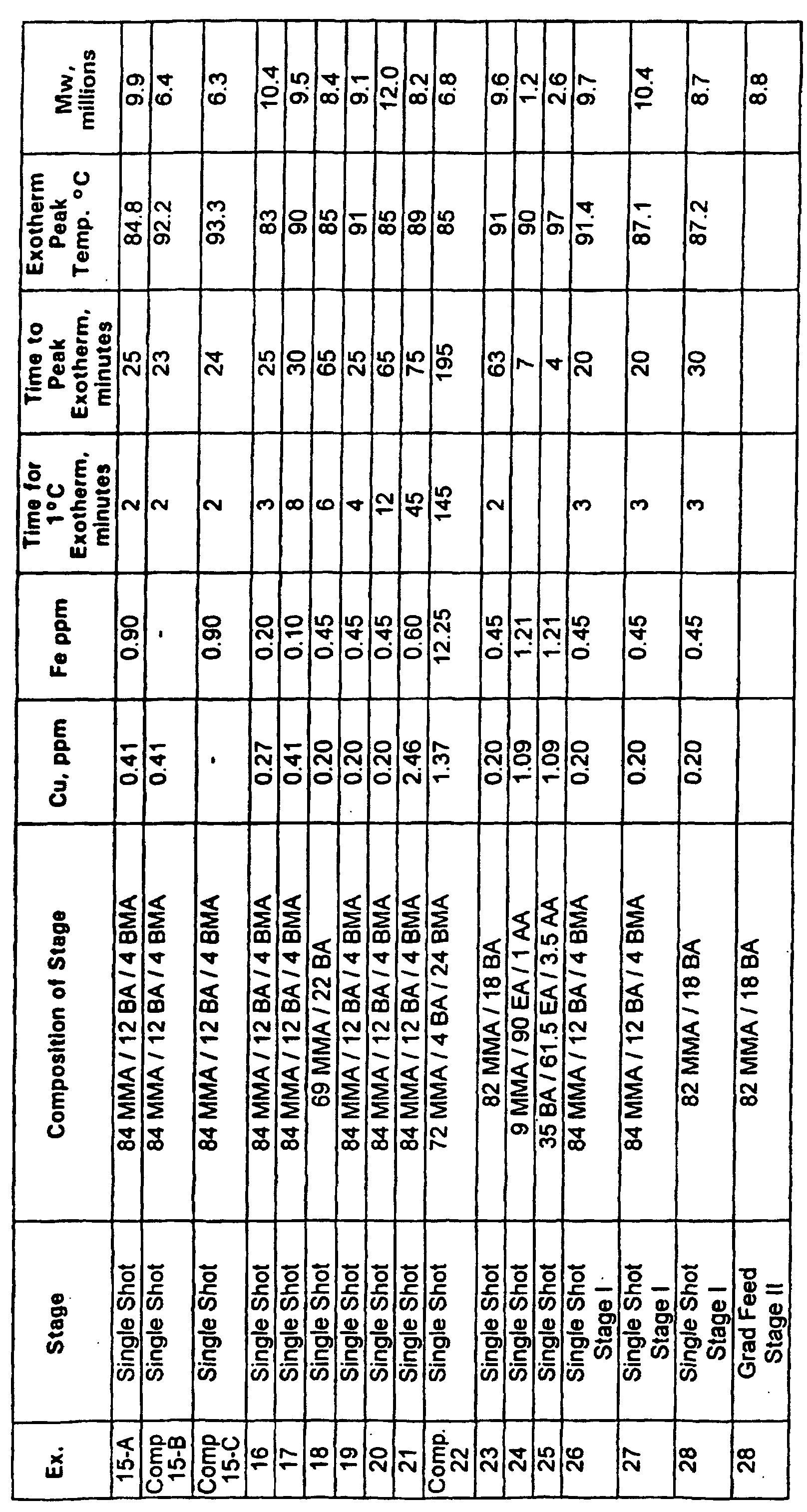

The following examples provide indication about the uses of the products obtained by the claimed process but do not represent subject matter for which protection is sought.

### EXAMPLES 29 - 37

### Use as Processing Aids for PVC

### A. Preparation of PVC Foam Masterbatch for use in sections B and C

The formulation indicated in the table below was used as a PVC masterbatch for demonstrating the efficacy of the compositions prepared according to the present invention as plastic additive polymers.

| | |
|---|---|
| PVC Resin (K value 62): | 100.0 |
| Azodicarbonamide (blowing agent) | 0.65 phr |
| Tin Stabilizer | 1.5 phr |
| Calcium Stearate (lubricant) | 1.0 phr |
| Paraffin Wax 165 (lubricant) | 0.5 phr |
| PARALOID K175) | 0.5 phr |
| TiO2 (pigment) | 1.0 phr |
| CaCO3 (filler) | 5.0 phr |

Masterbatch blends (about 15 kg) using a 40 liter Henschel Blender were prepared by blending the formulation components as follows: After the PVC was charged and the blades begin turning, the blender temperature increased from frictional heating at approximately 3-5°C/min. After the PVC and blowing agent were charged, the remaining ingredients were added through the addition port at approximately the listed temperatures as the temperature increased: Charge PVC and blowing agent to blender and close lid. Turn on mixing blades at about 1000 rpm. Monitor temperature. No cooling. Add tin stabilizer at 52°C. Add lubricants at 66°C. Add lubricating processing aid at 77°C. Add pigment at 88°C. Add filler at 90°C. At 100°C start cooling water flow. Reduce blade speed to near minimum (ca. 200 rpm). Cool to 45°C, turn off blades, and remove masterbatch powder from blender.

### B. Efficacy as PVC Foam Processing Aid: Free Foam Rod Testing

The emulsions prepared in Examples 1, 10, 11, 12, 13, 14, 18, and 23 were each spray dried using a lab scale spray drier to form a powdered product. Each of these spray dried polymers were tested as processing aids for PVC foam. Powders of each of these examples were individually blended at RT in a bag at a 4 phr loading with the PVC foam masterbatch powder described above.

The following equipment and conditions were used to prepare PVC free foam rods for subsequent testing: Haake Rheocord 90 Single Screw Extruder; Screw Compression Ratio: 3.3/1. Screw of 24/1 L/D ratio; Die: 3/16 inch Haake circular rod die. Running conditions: Screw speed 60 rpm; Set Temperature profile: Zone 1: 170°C, Zone 2: 180°C, Zone 3: 190°C, Die: 170°C. Powder was charge by gravity flood feeding.

Using the preceding equipment, conditions, and PVC foam formulation, free expansion foam rods were produced. Powder samples from examples 1, 10, 11, 12, 13, 14, 18, and 23 were each tested for their efficacy as a PVC foam processing aid; Examples 1 and 14 further contained 2.5% of a polymeric flow aid. A commercial processing aid, PARALOID K400 (Rohm and Haas Company), was similarly tested as a comparison. The expansion ratio (the ratio of cooled foam rod diameter to the die diameter) were recorded and are listed in the table below.

### B. Efficacy as PVC Foam Processing Aid: Free Foam Rod Testing

| Ex. | Source of Processing Aid | Density (g/cc) | Expansion Ratio |
|---|---|---|---|
| Comparative 29 | PARALOID (TM) K400 | 0.40 | 2.42 |
| 30 | Ex. 1 | 0.38 | 2.51 |
| 31 | Ex. 10 | 0.56 | 1.95 |
| 32 | Ex. 11 | 0.39 | 2.46 |
| 33 | Ex. 12 | 0.38 | 2.60 |
| 34 | Ex. 13 | 0.44 | 2.47 |
| 35 | Ex. 14 | 0.39 | 2.49 |
| 36 | Ex. 18 | 0.39 | 2.36 |
| 37 | Ex. 23 | 0.39 | 2.52 |

These results show the utility of the polymers of the present invention as processing aids for PVC foam. The rods all have smooth surfaces and low densities. It should be noted that without a foam processing aid added the PVC formulation probably would not be able to maintain the bubbles generated by the blowing agent. The rods produced would be of poor integrity and would collapse. Such rods would have poor surfaces, minimal expansion, and would exhibit minimal density reduction. All of the tested materials served to varying degrees as PVC foam processing aids.

### EXAMPLES 38 - 48

Efficacy as Processing Aids in PVC: PVC containing 4 phr of the polymers made according to the present invention were generated in a manner identical to that described in the previous section. These blends were tested for their efficacy in promoting fusion using the following equipment: Haake Rheocord 90; Attachment: Haake Bowl; Set Temperature: 170°C; Paddle Speed: 45 rpm; Sample Loading: 60 g. The plastics additives in examples 1, 4, 10, 11, 12, 13, 14, 18, and 23 were each tested for their efficacy as a fusion promoting PVC processing aid. A commercial processing aid, PARALOID (TM) K400 (Rohm and Haas Company, Philadelphia, Pennsylvania) was similarly tested as a comparison example. The formulation was also tested without any processing aid as a control (reference) example. The fusion time was determined as the time difference between the initial compaction time and the time to the torque maximum by measuring torque versus time. Each sample was tested twice and the recorded result listed is the average of the two tests as shown in the following table.

| **Ex.** | **Source of** **Processing Aid** | **Fusion Time (sec)** |
|---|---|---|
| Reference Example 38 | No Processing Aid | 130 |
| Comparative Example 39 | PARALOID (TM) K400 | 80 |
| 40 | Ex. 1 | 80 |
| 41 | Ex. 4 | 60 |
| 42 | Ex. 10 | 43 |
| 43 | Ex. 11 | 54 |
| 44 | Ex. 12 | 78 |
| 45 | Ex. 13 | 48 |
| 46 | Ex. 14 | 86 |
| 47 | Ex. 18 | 56 |
| 48 | Ex. 23 | 70 |

These results show that polymers prepared according to the present invention are useful for reducing the fusion time in PVC resin. The polymers of the present invention also provide PVC fusion times of about the same as, and even substantially below that obtainable with the commercially-available processing aid, PARALOID (TM) K400.

### EXAMPLES 49 and 50

Efficacy as Impact Modifier for PVC: The plastics additive polymer dispersion according to Example 7 was spray dried into a dry powder and blended at a level of 4 phr with the PVC masterbatch resin described below (Example 49):

| | |
|---|---|
| PVC (Geon 27) | 100.0 |
| ADVASTAB (TM) TM-181 (Rohm and Haas Co.) | 0.9 |
| HOSTALUB (TM) XL-165 (Clariant) | 0.9 |
| AC629A - oxidized polyolefin wax (Allied-Signal) | 0.1 |
| Calcium stearate | 1.4 |
| PARALOID (TM) K-120N (Rohm and Haas Co.) | 0.5 |
| TiO2 | 1.0 |
| CaCO3 | 10.0 |
| Impact Modifier of Ex. 7 | 4.0 |

This blend was extruded into sheet about 0.5 cm thick using a CM-55 twin screw extruder (Cincinnati Milacron, Cincinnati, Ohio) having a six inch sheet die and chilled take-off rolls operated at the following conditions: 182°C extruder zones; 191°C die zone; melt temp 184°C; rollers 54°C.

A second comparison blend (Example 50) was prepared using a commercially-available acrylic impact modifier, PARALOID (TM) KM-334 (Rohm and Haas Company, Philadelphia, Pennsylvania).

Extruded sheets were cut into test specimens for determining the efficacy of the plastics additive as an impact modifier by determining the rate of ductile versus brittle breaks during impact at 23°C. The drop-dart impact test method. was carried out under a constant 188 in-lb dart energy. The results shown in the table below indicate that the core-shell plastics additive of Example 7 shows improved impact modifying properties above that for the commercially available KM-334 impact modifier.

| | **Ex. 49** | **Comparative Ex. 50** |
|---|---|---|
| # Ductile Breaks | 17 | 12 |
| # Passes | 1 | 7 |
| # Brittle Breaks | 2 | 1 |

### EXAMPLES 51 - 60

Efficacy as Aqueous-based Coatings for Plastics: Several of the aqueous particle dispersions according to the present invention were spread with a sponge over the surface of various plastic parts varying in polarity to test their efficacy as coatings for plastics. The particle dispersions were first shaken prior to coating. After coating, the samples were covered and left to stand at room temperature for at least one day. Observations regarding the ability of the coating to spread and adhere to the plastic parts are recorded in the table below.

**Table:**

| **Coatings for Plastics** | | | | | |
|---|---|---|---|---|---|
| **Ex.** | **Plastic** **Substrate (a)** | **Plastic** **Polarity** | **Plastic** **Coating** | **Coatability of** **Dispersion** | **Dry Adhesion** **to Plastic** |
| 51 | PP | Lowest | Ex. 24 | Coats a little | Sticks |
| 52 | PP | Lowest | Ex. 25 | Coats | Sticks |
| 53 | PMMA | Low | Ex. 24 | Coats | Sticks |
| 54 | PMMA | Low | Ex. 25 | Coats | Sticks |
| 55 | PBT | Medium | Ex. 24 | Coats Well | Sticks |
| 56 | PBT | Medium | Ex. 25 | Coats Well | Sticks |
| 57 | PVC | High | Ex. 24 | Coats | Sticks |
| 58 | PVC | High | Ex. 25 | Coats (b) | Sticks |
| 59 | Nylon | Highest | Ex. 24 | Coats (c) | Sticks |
| 60 | Nylon | Highest | Ex. 25 | Does not Coat | Does not stick |

| | | | | | |
|---|---|---|---|---|---|
| (a) PP - Polypropylene, 6523 homopolymer (Montell) PMMA - Polymethyl methacrylate, PLEXIGLAS G (AtoHaas, N.A.) PBT - Poly(butylene terephthalate), VALOX 315 (GE Plastics) PVC - Polyvinyl chloride, Window side formulation toughened with PARALOID KM 653 (Rohm and Haas) Nylon - Capron 8202 Nylon 6 (Allied Chemical) toughened with PARALOID EXL-2611 (Rohm and Haas) | | | | | |
| (b) Not as well as Ex. 57 | | | | | |
| (c) Not as well as Ex. 58. | | | | | |

Inspection of the results in the table above shows that the polymer dispersions made in Examples 24 and 25 coat and adhere to plastics ranging in polarity from low to high. These results also show that many plastics varying in rating of surface polarity are amenable to being evenly coated by the polymer dispersions of the present invention.

Efficacy as PVC Foam Processing Aid: Free Foam Sheet: Emulsion from Example 26 was spray dried to form a powdered product. A PVC masterbatch formulation similar to that described in section A was prepared for use in producing PVC foam sheet. The azodicarbonamide (blowing agent) level used was 0.65 phr. The powdered Example 26 was post-blended at a level of 4.5 phr.

The equipment used to process the PVC formulation into foam sheet was a CM55 conical, intermeshing, counter-rotating twin-screw extruder (Cincinnati-Millacron, Cincinnati, Ohio). The PVC formulation was flood-fed to the CM55. Conditions used were as follows: Set Temperatures: Barrel Zone 1 =166 C; Barrel Zone 2 = 174 C; Barrel Zone 3 = 182 C; Barrel Zone 4 = 191 C; Screw Oil = 166 C; Die Body = 168 C; Die Lips = 135 C; Roll Temp = 66 C; Screw RPM = 750; Lip Gap = 1.55 mm. The foam sheet produced was of thickness 3.28 mm and width 500 mm. The surface was smooth and even. The density was 0.52 g/cc. Without the processing aid this formulation would not be able to produce a reasonable quality foam sheet with this density reduction.

Efficacy as PVC Foam Processing Aid: Celuka Foam Profile: The polymer dispersion from Example 27 was spray dried to form a powdered product using a spray-dryer. A PVC Celuka-type masterbatch formulation was prepared using a lead stabilizer for use in producing PVC foam profile. The powdered plastics additive from Example 27 was blended at a level of 6.5 phr. The equipment used to process the PVC formulation into foam profile was a flood-fed 46 mm parallel twin screw extruder (Bausano Group, Marnate/Varese, Italy) using a 9 mm thick skirting profile die. Screw speed was 29 rpm. The set temperatures on Barrel Zones 1 through 8 were set as follows: 140°C/150°C/160°C/170°C/175°C/170°C/165°C/160°C. The foam profile had a density of 0.53 g/cc and exhibited a smooth glossy surface. Without the processing aid, this formulation would not be able to yield a foam profile of reasonable surface quality or with this density reduction.

## Claims

1. A process for preparing an aqueous dispersion of plastics additive polymer particles, comprising the steps of
emulsion polymerizing one or more ethylenically unsaturated monomers in an aqueous medium in the presence of a free radical redox initiator system, wherein the free radical redox initiator system comprises an oxidizing agent, a reducing agent, and from 0.01 to 5.00 ppm based on monomer weight total iron and copper metal ion species.

2. The process according to claim 1 wherein the emulsion polymer has a molecular weight in the range of from 0.2 to 15 million g/mol.

3. The process according to claim 1 wherein the aqueous medium has a dissolved oxygen concentration in the range of from more than 0 ppm to 10 ppm as measured relative to the dissolved oxygen concentration in a 0.5 wt. % sodium bisulfite aqueous solution at 20°C under atmospheric pressure.

4. The process according to claim 1 further comprising the steps of subsequently adding one or more additional monomer mixtures comprising one or more ethylenically unsaturated monomers, and polymerizing the one or more additional monomer mixtures using one or more free radical initiator systems.

## Patentansprüche

1. Verfahren zur Herstellung einer wäßrigen Dispersion von Kunststoffadditiv-Polymerteilchen, umfassend die Schritte
des Emulsionspolymerisierens von ein oder mehreren ethylenisch ungesättigten Monomeren in einem wäßrigen Medium in der Gegenwart eines radikalischen Redoxinitiatorsystems, wobei das radikalische Redoxinitiatorsystem ein Oxidationsmittel, ein Reduktionsmittel und von 0,01 bis 5,00 ppm, bezogen auf das Monomergesamtgewicht, an Eisen- und Kupfermetallionenspezies umfaßt.

2. Verfahren nach Anspruch 1, wobei das Emulsionspolymer ein Molekulargewicht in dem Bereich von 0,2 bis 15 Millionen g/mol aufweist.

3. Verfahren nach Anspruch 1, wobei das wäßrige Medium eine Konzentration an gelöstem Sauerstoff in dem Bereich von mehr als 0 ppm bis 10 ppm, gemessen relativ zu der Konzentration an gelöstern Sauerstoff in einer 0,5 Gew.-%igen wäßrigen Natriumbisulfitlösung bei 20°C unter Atmosphärendruck, aufweist.

4. Verfahren nach Anspruch 1, weiter umfassend die Schritte des nachfolgenden Zugebens von einem oder mehreren zusätzlichen Monomergemischen, umfassend ein oder mehrere ethylenisch ungesättigte Monomere, und des Polymerisierens des einen oder der mehreren zusätzlichen Monomergemische unter Verwendung von einem oder mehreren radikalischen Initiatorsystemen.

## Revendications

1. Procédé de préparation d'une dispersion aqueuse de particules polymères d'additif pour plastique, comprenant les étapes suivantes :
polymériser en émulsion un ou plusieurs monomères insaturés en éthylène dans un milieu aqueux, en présence d'un système d'initiateur redox à radical libre, dans lequel le système d'initiateur redox à radical libre comprend un agent oxydant, un agent réducteur et 0,01 à 5,00 ppm, sur la base du poids total du monomère, d'espèces d'ions métalliques fer et cuivre.

2. Procédé selon la revendication 1, dans lequel le polymère en émulsion a un poids moléculaire dans la gamme allant de 0,2 à 15 millions g/mole.

3. Procédé selon la revendication 1, dans lequel le milieu aqueux a une concentration en oxygène dissous dans la gamme allant de plus de 0 ppm à 10 ppm, telle que mesurée par rapport à la concentration en oxygène dissous dans une solution aqueuse à 0,5 % en poids de bisulfite de sodium, à 20 °C et à la pression atmosphérique.

4. Procédé selon la revendication 1, comprenant en outre les étapes consistant à ajouter ensuite un ou plusieurs mélanges monomères supplémentaires comportant un ou plusieurs monomères insaturés en éthylène, et à polymériser le ou les mélanges monomères supplémentaires en utilisant un ou plusieurs systèmes d'initiateur à radical libre.
